# EUROPEAN PATENT APPLICATION

(11) **EP 4 325 285 A1**
(43) Date of publication of application: **21.02.2024**
(21) Application number: 22190962.5
(22) Date of filing: 18.08.2022
(51) Int. Cl.: G02F 1/21, G02F 1/225

(54) **A VARIABLE OPTICAL ATTENUATOR**

(71) Applicant: Accelink Denmark A/S, 3460 Birkerød (DK)
(72) Inventor: GERSBORG-HANSEN, Morten, 3460 Birkerød (DK); CARDI, Lorenzo, 3460 Birkerød (DK); ZAUNER, Dan Anker, 3460 Birkerød (DK); SHEN, Yueqiang, 3460 Birkerød (DK)
(74) Representative: Plougmann Vingtoft a/s

(57) **Abstract**

The invention relates to a variable optical attenuator. The variable optical attenuator (100) comprises a planar lightwave circuit comprising a waveguide embedded in a cladding layer supported on a silica-on-silicon substrate (176), the lightwave circuit comprising a Mach-Zehnder interferometer comprising an optical waveguide (101) comprising first and second optical components (102, 103), at least two waveguide branches (110a, 110b) comprising first and second waveguide extensions (111a, 111b). The first optical component is arranged to divide input light into the at least two waveguide branches and the second optical component is arranged to combine light from the at least two waveguide branches. The attenuator further comprises first and second heating elements (121a, 121b) arranged to heat the first and second waveguide extensions, a center recess structure (130) comprising one or more recesses formed in the silica-on-silicon substrate. A first distance (D1) separating the first optical component and the nearest recess edge of the center recess structure is greater than 1000 µm.

## Description

### FIELD OF THE INVENTION

The invention relates to a variable optical attenuator constructed as a Mach-Zehnder planar lightwave circuit.

### BACKGROUND OF THE INVENTION

Variable optical attenuators (VOA) are key components in optical telecommunications networks. Increased network capacity demands drive the performance requirements of VOA components towards lower electrical power consumption while maintaining premium optical performance characteristics. Variable optical attenuators may be based on the thermo-optic effect in a interferometer configuration such as a Mach-Zehnder configuration for achieving externally controlled attenuation.

A key issue with variable optical attenuators is polarization dependent loss (PDL) which may arise due to stress effects.

US2005/135728A1 discloses a variable optical attenuator constructed as a Mach-Zehnder planar lightwave circuit (PLC). The variable optical attenuator comprises a channel waveguide support structure for heat isolation and stress relief to reduce polarization dependent loss and power consumption in the device. Power reduction trenches comprise longitudinal segments having small stress relief pillars of cladding material left in between them in the etching process. The waveguides are supported by a main pillar structure and integral stress relief pillars which remain after removal of the trenches. The waveguide is surrounded by air on three sides for improved heat isolation. The performance of the invention shows substantial improvement in PDL and extinction ratio over the prior art continuous trench design, and also, to a smaller degree, over the case where power reduction trenches are not used at all. Segmented trenches appear to allow for the lowest stress on the two waveguide arms of all the cases including no trench and trenched devices.

Whereas US2005/135728A1 addresses the problem with polarization dependent loss, improvements such as simplified design, lower polarization dependent loss and electrical power consumption are still desired.

### SUMMARY OF THE INVENTION

It is an object of the invention to improve variable optical attenuators particularly to achieve reduced polarization dependent loss and reduced electrical power consumption.

In a first aspect of the invention a variable optical attenuator is presented which comprises a body part comprising a silicon layer and a glass layer,
- an optical waveguide arranged in the glass layer and comprising first and second optical components, at least two waveguide branches comprising first and second waveguide extensions, wherein the first optical component is arranged to divide input light into the at least two waveguide branches and the second optical component is arranged to combine light from the at least two waveguide branches into a light output,
- first and second heating elements extending along at least a fraction of the length of the respective first and second waveguide extensions and arranged to heat the first and second waveguide extensions,
- a center recess structure comprising one or more recesses formed in the glass layer, wherein the center recess structure extends along at least a fraction of the length of the waveguide extension between the first and second waveguide extensions from a first location of the center recess structure proximate to the first optical component to a second location of the center recess structure proximate to the second optical component,
- wherein a first distance from the first optical component to the first location of the center recess is greater than 1000 µm.

Advantageously, by designing the variable optical attenuator with a sufficiently large distance greater than 1000 µm between the recess or trench formed in the glass layer to provide thermal isolation, stresses generated in the body part e.g. when the recess is made, such as by deep-etching, are smaller or affect the polarization behaviour of the first and second optical components to a smaller degree.

The first and second optical components comprise multi-mode parts arranged to divide light into single-mode waveguides and to combine the light from the single-mode waveguides under effects of interference. Accordingly, the first and second optical components may be multi-mode interference components, such as first and second optical couplers.

Thus, the optical waveguide or waveguide circuit such as a planar waveguide circuit comprises an interferometer such as a Mach-Zehnder interferometer.

The glass layer which may comprise different glass layers having different properties may be arranged on top of the silicon layer.

The first and second waveguide extensions are arranged to extend a length of one of the at least two waveguide branches to support the thermo-optic effect. The first and second waveguide extensions may be arranged in parallel to each other.

The first distance may be within a range from 1000 - 3000 µm such as within a range from 1500 - 2500 µm. Similarly, a second distance between the second optical component and the second location of the center recess structure may be greater than 1000 µm, such as within a range from 1000 - 3000 µm such as within a range from 1500 - 2500 µm.

A too large first distance and/or second distance would limit the fraction of the length of the first and second heating elements along which the heat isolation effect due to the recess structure is applied and thereby the variable optical attenuator would require larger electrical power consumption and a higher heater temperature to achieve the same optical attenuation. However, high temperatures are not desired and may lead to heat induced stress. Accordingly, the upper values of the range of said distances are limited.

The center recess structure may comprise a single recess, i.e. the center recess structure may be formed as a single hole. Alternatively, the center recess structure is formed by a plurality of recesses separated by walls of the glass layer.

The center recess structure may have a length in a direction along the waveguide extensions of 2 - 7 mm. The length of any of the first and second heating elements in the same direction may be within a range of 2 - 9 mm and may thus be longer or shorter than the center recess structure.

According to an embodiment, the variable optical attenuator further comprises first and second side recess structures each comprising one or more recesses formed in the glass layer, wherein the side recess structures extend along at least a fraction of the length of the first and second waveguide extensions and along sides of the first and second waveguide extensions facing away from the center recess structure.

According to an embodiment, the first and second side recess structures together with the center recess structures form first and second longitudinal projections, or narrow ridges, within separations between the respective first and second side recess structures and the center recess structure and where the first and second waveguide extensions are formed in the respective first and second longitudinal projections.

Advantageously, the side recess structures limit the portions of the substrate containing the first and second waveguide extension to narrow ridges and therefore further increase the heat isolation effect applied to the first and second waveguide extensions.

The first and second longitudinal projections may have a width within a range of 10 - 200 µm in a direction perpendicular to the elongated direction of the first and second longitudinal projections.

According to an embodiment, the body part comprises
- a silica-on-silicon substrate comprising a silicon substrate and a furnace-grown silica layer, and
- a cladding layer, and wherein
- the glass layer comprises the furnace-grown silica layer and the cladding layer.

According to an embodiment, the optical waveguide is embedded in the cladding layer, such as embedded substantially in the cladding layer, the first and second heating elements are arranged on top of the cladding layer opposite to the first and second waveguide extensions, and the one or more recesses of the center recess structure extends through the cladding layer.

It is understood that the optical waveguide is embedded substantially in the cladding layer since the process of forming the waveguide implies that a part of the waveguide may extend into the furnace-grown silica layer.

The recesses of the center recess structure and/or the side recess structure may additionally extend at least partly through the furnace-grown silica layer and possibly into the silicon layer.

The optical waveguide, i.e. a waveguide circuit, is embedded in a cladding glass layer supported on a silica-on-silicon substrate which comprises the silicon layer and a furnace-grown silica layer which forms part of the glass layer, the optical waveguide circuit comprises a Mach-Zehnder interferometer, wherein the first and second heating elements are arranged on top of the cladding layer opposite to the first and second waveguide extensions, and wherein the one or more recesses of the center recess structure extends through the silica cladding layer and at least partly through the silica layer of the silica-on-silicon substrate.

Further, the core of the optical waveguide is formed on top of the silica-on-silicon substrate in the glass layer and with higher refractive index than the surrounding furnace-grown silica and cladding glass. The furnace-grown silica layer and the cladding layer define the boundary between the lower and upper parts of the optical waveguide.

A second aspect of the invention relates to the use of a variable optical attenuator according to the first aspect.

In short, the invention relates to a variable optical attenuator. The attenuator comprises a planar lightwave circuit supported on a silica-on-silicon substrate comprising an optical waveguide comprising first and second optical components, at least two waveguide branches comprising first and second waveguide extensions. The first optical component is arranged to divide input light into the at least two waveguide branches and the second optical component is arranged to combine light from the at least two waveguide branches. The attenuator further comprises first and second heating elements arranged to heat the first and second waveguide extensions, a center recess structure comprising one or more recesses formed in the silica-on-silicon substrate. A first distance, which is a minimum distance, separating the first optical component and the recess edge of the center recess structure closest to the first optical component has value greater than one of the following values: 1000 µm, 1100 µm, 1200 µm, 1300 µm, 1400 µm, 1500 µm, 1600 µm, 1700 µm, or 1800 µm. At the same time, the first distance has a values smaller than one of the following values: 4000 µm, 3000 µm, 2800 µm, 2700 µm, 2600 µm, 2500 µm, 2400 µm, 2100 µm or 2000 µm.

In general, the various aspects and embodiments of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 shows a top view of the variable optical attenuator,
Fig. 2 shows a cross sectional view A-A of Fig. 1,
Fig. 3 shows measurements of phase angle change Δϕ per mW electrical power applied to one of the heating elements 121a, 121b for different values of D,
Figs. 4 and 5 show polarization dependent loss as a function of the distance D under the condition that the heating elements are controlled to achieve a specific optical attenuation.

### DESCRIPTION OF EMBODIMENTS

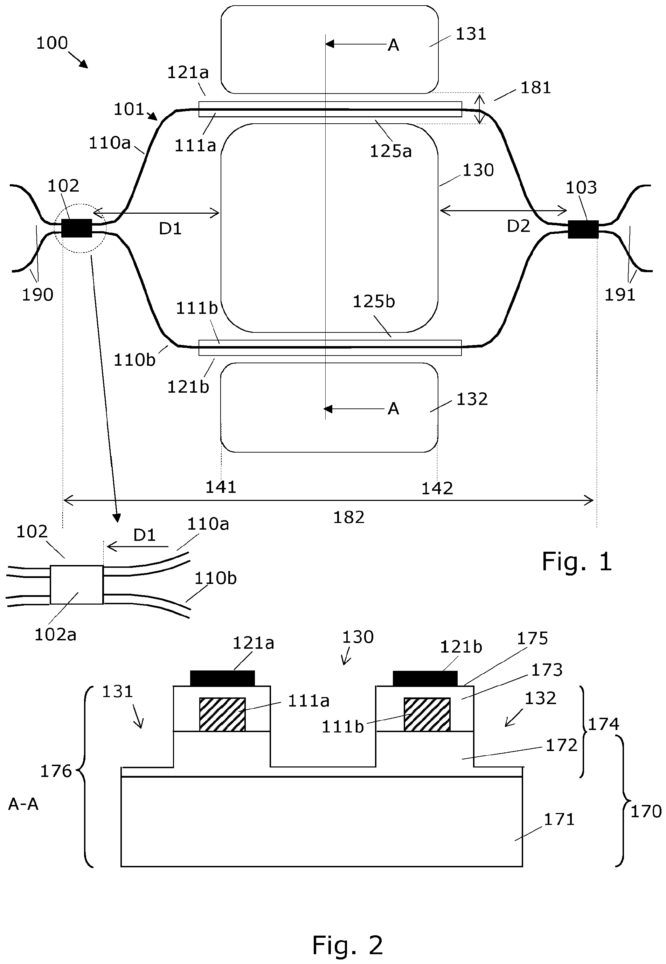

Fig. 1 shows a principal top view sketch of a planar lightwave circuit variable optical attenuator 100. The variable optical attenuator 100 comprises an optical waveguide such as a waveguide circuit 101 embedded substantially in a cladding layer supported on a silica-on-silicon substrate, the optical waveguide 101 comprises a Mach-Zehnder interferometer. The optical waveguide 101 is manufactured using silica-on-silicon process technology starting from a silicon substrate, upon which a silica layer is grown by means of high-temperature oxidation in a furnace. The core of the waveguide is formed on top of the silica-on-silicon substrate in a glass layer with higher refractive index than the surrounding cladding glass.

Fig. 2 shows a cross sectional view A-A of Fig. 1 showing that the variable optical attenuator 100 comprises a body part 176 which comprises a silicon layer 171 and a glass layer 174. The silicon layer 171 is part of a silica-on-silicon substrate 170 which comprises the silicon layer or substrate 171 and a furnace-grown silica layer 172. The waveguide core of the optical waveguide 101 is formed on top of the silica-on-silicon substrate 170 in a glass layer with higher refractive index than the surrounding cladding glass 173. The glass layer 174 comprises the cladding layer 173, in which the waveguide core is embedded, on top of the furnace-grown silica layer 172.

Waveguide portions 111a, 111b of the optical waveguide 101 are principally shown in Fig. 2 to have a well-defined boundary at the boundary between the cladding layer 173 and the furnace-grown silica layer 172. In practice, the boundary of the optical waveguide 101, i.e. in the cross-sectional plane in Fig. 2, may not form a sharp boundary and the extension of the optical waveguide 101 in the cross-sectional plane may extend into the furnace-grown silica layer 172.

The optical waveguide 101 comprises a first optical component 102 arranged to divide input light into at least two waveguide branches 110a, 110b.

In this example, the first optical component 102 is a 2x2 multimode interference (MMI) coupler. However, the first optical component 102 may be any optical coupler or splitter arranged to divide input light into the at least two waveguide branches 110a, 110b. Thus, in general the optical component 102 may be an MxN optical coupler or splitter, where M can 1 or more and N can be 2 or more. Examples of the first optical component comprises a 3 dB directional coupler or a 2x2 MMI coupler arranged to receive input light from two input waveguides and couple the input light into two waveguide branches 110a, 110b. In another example, the optical component 102 is a 1x2 Y splitter arranged to receive light from one input waveguide and split the input light into two waveguide branches 110a, 110b.

The input light is light transmitted into the optical component 102 via one or more input waveguides 190 - here the two input waveguides 190.

The optical waveguide 101 further comprises a second optical component 103 arranged to combine light from the at least two waveguide branches 110a, 110b into a light output such as one or more light outputs. The second optical component 103 may be any of the types of the first optical component 102 and may be selected as the same or a different type than the first optical component 102.

The light output is light transmitted away from the optical component 103 via one or more output waveguides 191 - here two output waveguides 191.

As illustrated in the enlarged view of the first optical component 102, the optical component 102 comprises a multimode waveguide portion 102a connected to the two or more waveguide branches 110a, 110b. The waveguide branches 110a, 110b may be single mode waveguides. Accordingly, light is coupled from the multimode waveguide portion 102a into the waveguide branches 110a, 110b. The second optical component 103 is configured in the same way, i.e. it comprises a multimode waveguide portion which is arranged to receive and couple light from the two or more waveguide branches 110a, 110b into the one or more output waveguides 191.

The optical waveguide 101 further comprises at least two waveguide extensions 111a, 111b, such as first and second waveguide extensions, arranged as extensions of the two or more waveguide branches 110a, 110b and connecting the at least two output waveguide branches of the first optical component 102 with the two or more input waveguide branches of the second optical component 103. The waveguide extensions may be arranged as straight waveguides and parallel to each other.

The variable optical attenuator 100 further comprises first and second heating elements 121a, 121b extending along at least a fraction of the length of the respective first and second waveguide extensions 111a, 111b. The heating elements 121a, 121b comprises electrically conductive material such as a metal. By applying electrical power to the heating elements, heat is generated due to Joule heating. The first and second heating elements 121a, 121b may be arranged on top of the cladding of the respective first and second waveguide extensions 111a, 111b, such as directly opposite to the first and second waveguide extensions 111a, 111b. Therefore, the heat from the heating elements causes heating of the waveguide extensions and their surroundings.

The variable optical attenuator 100 further comprises one or more recess structures 130, 131, 132. The recess structures comprises a center recess structure 130 arranged between the first and second waveguide extensions 111a, 111b. The center recess structure 130 extends from a first location 141 of the center recess facing the first optical component 102 to a second location 142 of the center recess facing the second optical component 103. The length of the center recess structure 130, i.e. the extension between the first and second locations, may be shorter or longer than the length of the first and second waveguide extensions 111a, 111b and shorter or longer than the length of the first and second heating elements 121a, 121b. Thus, the length of the center recess structure may be at least a fraction of the length, along the same direction, of the first and second waveguide extensions 111a, 111b, or of the first and second heating elements 121a, 121b.

The center recess structure 130 comprises one or more recesses formed in the glass layer 174. Each of the one or more recesses, which may be created by etching, has an opening in the top surface of the cladding layer which extends down into the silica-on-silicon substrate, i.e. into the furnace-grown silica layer 172.

The center recess structure 130 may comprise a single recess, i.e. a hole, as in the example in Fig. 1, or may comprise a plurality of recesses separated by non-etched areas. It is also possible that a single recess may comprise protrusions of non-etched portions, such as pillar structures, of the glass layer or silica-on-silicon substrate.

Additionally, as shown in Fig. 1, the variable optical attenuator 100 may comprise first and second side recess structures 131, 132 arranged along sides of the first and second waveguide extensions 111a, 111b so that the first and second waveguide extensions 111a, 111b extend between the first side recess structure 131 and the center recess structure 130, and between the second side recess structure 132 and the center recess structure 130, respectively. Thus, the side recess structures 131, 132 extend along at least a fraction of the length of the first and second waveguide extensions 111a, 111b and alongside the first and second waveguide extensions 111a, 111b, respectively, facing away from the center recess structure 130.

As illustrated, the length of the first and second side recess structures 131, 132 and the centre recess structure 130 along the first and second waveguide extensions 111a, 111b may be equal or substantially equal.

The first and second side recess structures 131, 132 are configured and formed according to the same possible configurations as those of the center recess structure 130.

The one or more recesses of the center recess structure and the first and second side recess structures provide local thermal isolation when electrical power is applied to the first and second heating elements. That is, the air filled recesses reduce heat transfer between the first and second waveguide extensions 111a, 111b and generally reduce heat conduction away from the first and second waveguide extensions 111a, 111b. The reduced heat conduction lowers the electrical power required for increasing the temperature of the waveguide extensions 111a, 111b by a given amount, i.e. it allows for a more efficient operation of the variable optical attenuator by means of the thermo-optic effect.

The elongated portions of the glass layer containing the first and second waveguide extensions 111a, 111b and extending between the first side recess structure 131 and the center recess structure 130 and between the second side recess structure 132 and the center recess structure 130, respectively, form first and second longitudinal projections 125a, 125b, i.e. structures formed as ridges or walls between the side recess structures 131, 132 and the center recess structure 130. Thus, the first and second side recess structures 131, 132 together with the center recess structure 130 form the first and second longitudinal projections 125a, 125b, within separations between the respective first and second side recess structures 131, 132 and the center recess structure 130. The first and second waveguide extensions 111a, 111b therefore extend within the respective first and second longitudinal projections 125a, 125b.

The first and second longitudinal projections may have a width 181 in the range from 10 - 1000 µm such as from 10 - 200 µm.

The center recess structure 130, as well as the side recess structures 131, 132 may have a length along and parallel with the waveguide extensions 111a, 111b, i.e. along the light propagation direction in the waveguide extensions, within a range of 2 - 7 mm. The length of the center recess structure 130 and/or the side recess structures 131, 132 correspond to the distance between the first and second locations 141, 142.

Similarly, any of the first and second heating elements may have a length along and parallel with the waveguide extensions 111a, 111b within a range of 2 - 9 mm.

Fig. 1 indicates a first distance D1 from the first optical component 102 to the first location 141 of the center recess 130. The first distance D1 is measured from the location of the optical component 102 where the waveguides 110a, 110b branch out of the multi-mode part of the optical component 102 as shown in the enlarged view of the optical component 102.

The first distance D1 is the shortest distance between the optical component 102 and the center recess 130, i.e. it is measured along a direction which is parallel to the waveguide extensions 111a, 111b.

The first distance D1 is preferably greater than 1000 µm and may be a distance within any of the ranges: 1000 - 4000 µm, 1100 - 3000 µm, 1200 - 2800 µm, 1300 - 2700 µm, 1400 - 2600 µm, 1500 - 2500 µm, 1600 - 2400 µm and 1700 - 2100 µm.

The similarly defined second distance D2 between the second optical component 103 and the second location 142 of the center recess 130 may have distances within the same ranges as those of the first distance D1.

The distance 182 between the first and second optical component 102, 103 measured between the input to the multi-mode part of the first optical component 102 and the output of the multi-mode part of the second optical component 103 may be in the range from 5 to 15 mm.

Fig. 2 shows a cross sectional view A-A of the variable optical attenuator in Fig. 1. The silica-on-silicon substrate 170 comprises a silicon substrate 171 and a furnace-grown silica layer 172. The waveguide core of the optical waveguide 101, here illustrated as the waveguide extensions 111a, 111b, is formed on top of the silica-on-silicon substrate 170 in a glass layer with higher refractive index than the surrounding cladding glass 173.

The furnace-grown silica layer 172 and cladding layer 173 are not necessarily distinct layers, but are merely arbitrary layers defining the boundary between the lower and upper parts of the optical waveguide 101. The furnace-grown silica layer 172 contributes to optical confinement as well as provides thermal isolation.

Thus, the optical waveguide 101 is embedded in the glass layer 174 such as in the cladding layer 173 or substantially in the cladding layer 173.

The first and second heating elements 121a, 121b are arranged on top of the cladding layer 173 and are covered by a passivation layer (not shown in Fig. 2).

The longitudinal center axes, i.e. axes which are collinear with the geometrical centres of the cross-sectional areas of the heating elements, respectively the waveguide extensions 111a, 111b, may be located in the same vertical plane which is perpendicular to the plane of the planar top surface 175 of the cladding layer 173.

The one or more recesses of the center recess structure 130 and optionally the one or more recesses of the side recess structures 131, 132 extend in a vertical direction, i.e. perpendicular to the plane of the top surface 175 of the cladding layer 173, through the cladding layer and at least partly through the furnace-grown silica layer 172.

Thus, the recesses are formed as holes having openings in the planar top surface 175 of the cladding layer 173 and whose holes extend vertically downwards towards the silicon layer 171. The holes extend at least through the cladding layer 173, i.e. below the boundary between the cladding layer 173 and the silica-on-silicon substrate 170. It is also possible that the holes extend down to the upper surface of the silicon substrate 171, i.e. to the boundary between the furnace-grown silica layer 172 and the silicon substrate 171, or the holes may even extend into the silicon substrate.

The recesses of the recess structures may be achieved by deep-etching methods.

The interferometer configuration of the variable optical attenuator 100, e.g. a Mach-Zehnder interferometer as illustrated here, comprises the two optical components 102, 103 connected by the at least two waveguide branches 110a, 110b with resistive heaters 121a, 121b located on top of the waveguide extension parts 111a, 111b of at least two of the waveguide branches to enable the application of heat to the waveguide extensions 111a, 111b of at least two of the waveguide branches 110a, 110b independently. The independent heating enables a difference in optical path length between the independently heated waveguide branches 110a, 110b and thereby variable optical attenuation.

The controllable optical attenuation of the variable optical attenuator 100 is achieved by utilizing the thermo-optic effect when the waveguide extensions 111a, 111b are individually heated and thereby changes the refractive index of the waveguides. The light output from the waveguide extensions 111a, 111b are combined in the multimode part of the second optical component 103 and thereby leads to variable attenuation due to interference.

The temperature distribution inside the variable optical attenuator 100 is critical for the performance of the variable optical attenuator, such as the electrical power consumption and polarization dependent loss (PDL). The recesses of the center recess structure 130 and optionally the side recess structures 131, 132 provide thermal management required to achieve low electrical power consumption.

The polarization dependent loss is highly sensitive to stress. All stress contributions due to mechanical and thermal effects in the surroundings of the first and second optical components 102, 103 and the first and second waveguide branches 110a, 110b must be balanced and/or reduced to achieve low PDL of the variable optical attenuator 100.

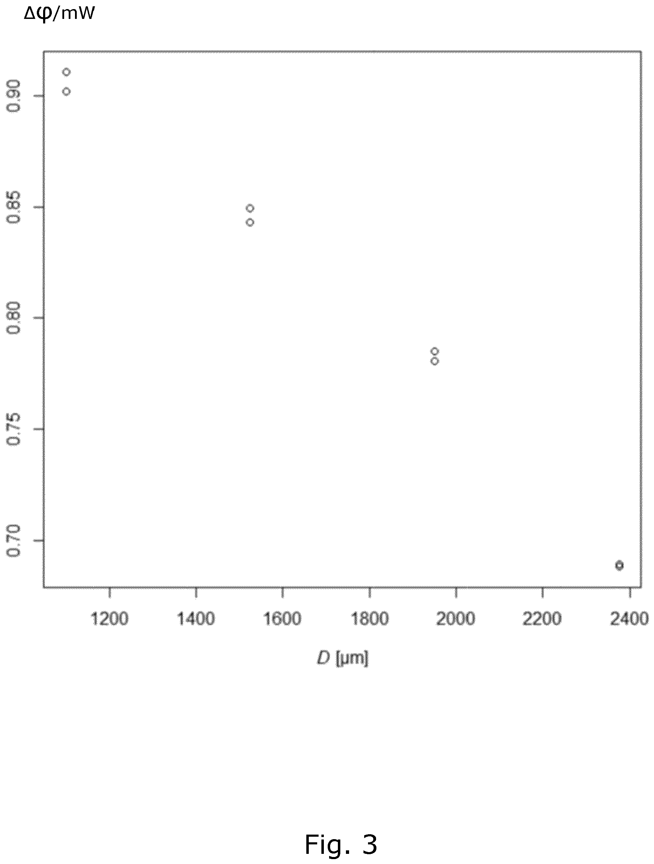

Fig. 3 show measurements of optical phase angle change Δϕ per mW electrical power applied to one of the electrical heating elements 121a, 121b for different values of D. Here, D1 and D2 are equal and therefore D=D1=D2. The phase angle ϕ is defined as the angular wavenumber multiplied by the difference in optical path length between the first and second waveguide branches 110a, 110b. Thus, as shown, an increase of D decreases the phase angle change Δϕ per mW applied electrical power since the length of the recesses of the center and side recess structures is decreased (e.g. due to a fixed length 182, corresponding to a fixed length of the variable optical attenuator 100) and thus shortens the length of the first and second longitudinal projections 125a, 125b that provide the increased thermal isolation of and between the first and second waveguide extensions 111a, 111b.

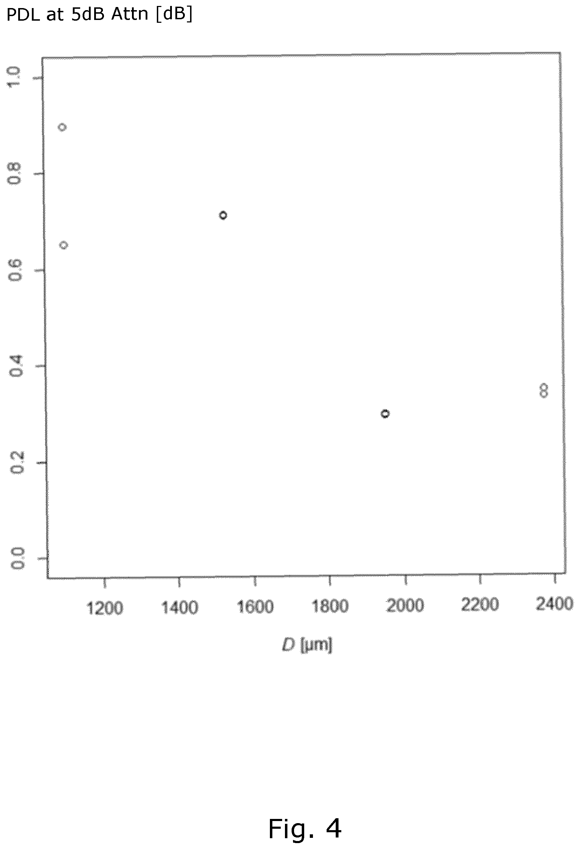

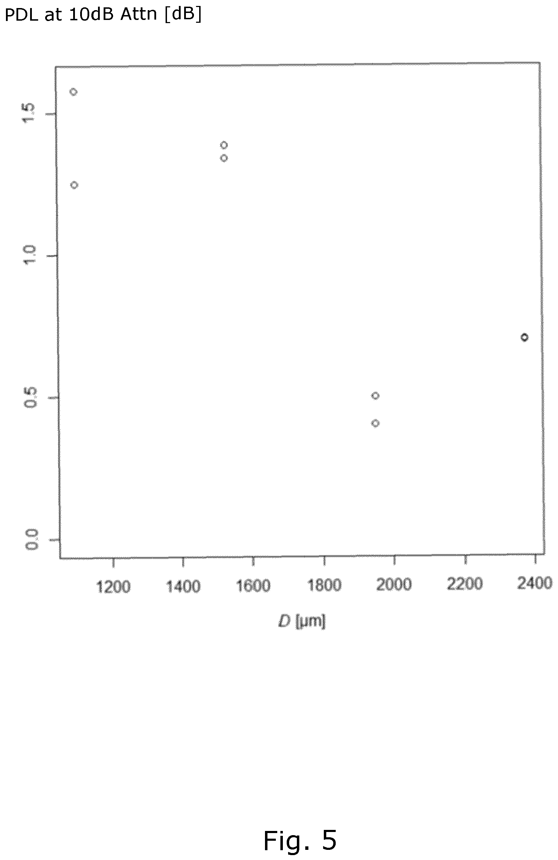

Fig. 4 shows the polarization dependent loss PDL in dB as a function of the distance D in a situation where the heating elements 121a, 121b are controlled to achieve an optical attenuation of 5dB. Fig. 5 shows the same polarization dependent losses when the heating elements 121a, 121b are controlled to achieve an optical attenuation of 10dB.

The results in Fig. 4 and Fig. 5 clearly indicate a regime of distances D1, D2 where low PDL (PDL at 10 dB Attn ~ 0.5 dB; PDL at 5 dB Attn ~ 0.3 dB) can be achieved by defining the recesses sufficiently far away from the first and second optical components 102, 103 while still obtaining low electrical power consumption. Thus, Fig. 4 and 5 suggest that D1 and/or D2 should be greater than 1800 µm where low PDL is achieved. Within the range from 1800 - 2200 µm for distances D1, D2, Fig. 3 shows acceptable levels of power consumption, i.e. Δϕ per mW of the order 0.8 °/mW.

Other ranges of the first and second distance D1, D2 as indicated above are also feasible and relevant for other configurations of the variable optical attenuator 100. Thus, ranges of D1 and D2 within 1100-2400 µm as shown in the Figs. 3-5, or even outside these ranges, such as distances D1, D2 greater than 1000 µm may be feasible.

## Claims

1. A variable optical attenuator (100) comprising
- a body part (176) comprising a silicon layer (171) and a glass layer (174),
- an optical waveguide (101) arranged in the glass layer (174), wherein the optical waveguide comprises first and second optical components (102, 103), at least two waveguide branches (110a, 110b) comprising first and second waveguide extensions (111a, 111b), wherein the first optical component (102) is arranged to divide input light into the at least two waveguide branches and the second optical component (103) is arranged to combine light from the at least two waveguide branches into a light output,
- first and second heating elements (121a, 121b) extending along at least a fraction of the length of the respective first and second waveguide extensions (111a, 111b) and arranged to heat the first and second waveguide extensions,
- a center recess structure (130) comprising one or more recesses formed in the glass layer (174), wherein the center recess structure extends along at least a fraction of the length of the waveguide extension between the first and second waveguide extensions from a first location (141) of the center recess structure proximate to the first optical component (102) to a second location (142) of the center recess structure proximate to the second optical component (103),
- wherein a first distance (D1) from the first optical component (102) to the first location (141) of the center recess structure is greater than 1000 µm.

2. A variable optical attenuator according to claim 1, wherein the first distance (D1) is within a range from 1100 - 3000 µm such as within a range from 1500 - 2500 µm.

3. A variable optical attenuator according to any of the preceding claims, wherein a second distance (D2) from the second optical component (103) to the second location (142) of the center recess structure is greater than 1000 µm, such as within a range from 1100 - 3000 µm such as within a range from 1500 - 2500 µm.

4. A variable optical attenuator according to any of the preceding claims, wherein the first and second optical components are multi-mode interference components.

5. A variable optical attenuator according to any of the preceding claims, wherein the center recess structure (130) comprises a single recess.

6. A variable optical attenuator according to any of the preceding claims, wherein a length of the center recess structure according to the distance between the first and second locations (141, 142) of the recess is within a range of 2 - 7 mm.

7. A variable optical attenuator according to any of the preceding claims, wherein a length of any of the first and second heating elements (121a, 121b) is within a range of 2 - 9 mm.

8. A variable optical attenuator according to any of the preceding claims, comprising first and second side recess structures (131, 132) each comprising one or more recesses formed in the glass layer (174), wherein the side recess structures extend along at least a fraction of the length of the first and second waveguide extensions (111a, 111b) and along sides of the first and second waveguide extensions facing away from the center recess structure.

9. A variable optical attenuator according to claim 8, wherein the first and second side recess structures (131, 132) together with the center recess structure (130) form first and second longitudinal projections (125a, 125b) within separations between the respective first and second side recess structures and the center recess structure and where at least a part of the first and second waveguide extensions (111a, 111b) are formed in the respective first and second longitudinal projections.

10. A variable optical attenuator according to claim 9, wherein any of the first and second longitudinal projections (125a, 125b) has a width (181) within a range 10 - 200 µm in a direction perpendicular to the elongate direction of the first and second longitudinal projections.

11. A variable optical attenuator according to any of the preceding claims, wherein the first and second optical components (102, 103) are first and second optical couplers.

12. A variable optical attenuator according to any of the preceding claims, wherein each of the first and second waveguide extensions (111a, 111b) are arranged to extend a length of one of the at least two waveguide branches (110a, 110b).

13. A variable optical attenuator according to any of the preceding claims, wherein the elongate directions of each of the first and second waveguide extensions (111a, 111b) are parallel.

14. A variable optical attenuator according to any of the preceding claims, wherein the body part comprises:
- a silica-on-silicon substrate (170) comprising a silicon substrate (171) and a furnace-grown silica layer (172), and
- a cladding layer (173), and wherein
- the glass layer (174) comprises the furnace-grown silica layer (172) and the cladding layer (173).

15. A variable optical attenuator according to claim 14, wherein
- the optical waveguide (101) is embedded in the cladding layer (173), such as embedded substantially in the cladding layer (173),
- the first and second heating elements (121a, 121b) are arranged on top of the cladding layer (173) opposite to the first and second waveguide extensions (111a, 111b), and
- the one or more recesses of the center recess structure (130) extends through the cladding layer.
